# EUROPÄISCHE PATENTSCHRIFT

(11) **EP 4 145 011 B1**
(45) Veröffentlichungstag und Bekanntmachung des Hinweises auf die Patenterteilung: **01.11.2023**
(21) Anmeldenummer: 21194381.6
(22) Anmeldetag: 01.09.2021
(51) Int. Cl.: F16D 65/12

(54) **BREMSEINHEIT UND VERFAHREN ZU DEREN HERSTELLUNG**
BRAKE UNIT AND METHOD FOR THE PRODUCTION OF SAME
UNITÉ DE FREINAGE ET SON PROCÉDÉ DE FABRICATION

(43) Veröffentlichungstag der Anmeldung: 08.03.2023
(73) Patentinhaber: Fischer & Kaufmann GmbH & Co. KG, 57413 Finnentrop (DE)
(72) Erfinder: SCHRÖDER, Daniel, 57413 Finnentrop (DE); BREIDEBACH, Thomas, 57439 Attendorn (DE)
(74) Vertreter: Wunderlich & Heim Patentanwälte Partnerschaftsgesellschaft mbB

(56) Entgegenhaltungen:
- EP-A1- 0 830 520
- EP-A1- 2 245 330
- EP-A1- 2 263 813
- EP-B1- 0 830 520
- EP-B1- 2 245 330
- WO-A1-2019/025529
- WO-A2-2015/058314
- DE-A1- 10 125 111
- DE-A1-102010 007 082
- DE-A1-102013 006 423
- DE-A1-102018 120 125
- DE-A1-102019 103 801

## Beschreibung

Die Erfindung betrifft eine Bremseinheit, welche einen scheibenförmigen Reibring und ein Halteteil aufweist, welche miteinander verbunden sind, gemäß dem Oberbegriff des Anspruchs 1. Weiterhin betrifft die Erfindung ein Verfahren zum Herstellen einer Bremseinheit nach dem Oberbegriff des Anspruchs 9.

Aus der gattungsbildenden EP 1 013 956 A2 ist es bekannt, Bremseinheiten aus zwei unterschiedlichen Komponenten herzustellen, nämlich einem Reibring und einem Halteteil. Der Reibring kann dabei aus einem für das Reibungsverhalten einer Bremse günstigen Material, beispielsweise einem Gussmaterial, hergestellt sein. Das Halteteil hingegen kann aus einem vorzugsweisen festen Stahlmaterial, insbesondere aus einem Blech, gefertigt werden. Das Halteteil dient zur Befestigung der Bremseinheit insbesondere an einer Radeinheit oder einer Achse.

Derartige Bremsen werden insbesondere an Kraftfahrzeugen oder Schienenfahrzeugen eingesetzt.

Bei der Bremseinheit aus der EP 1 013 956 A2 werden der Reibring und das topfförmige Halteteil über Schraubverbindungen miteinander verbunden. Derartige Schraubverbindungen sind jedoch aufwändig in der Herstellung und können sich aufgrund von an einer Bremse auftretenden starken mechanischen und thermischen Wechselbeanspruchungen lösen. Dem entgegenzuwirken bedarf zusätzlicher kostenaufwändiger Maßnahmen.

Weiter ist es bekannt, an einer Mittenöffnung eines Reibringes eine Innenprofilierung vorzusehen. Hierzu ist es bekannt, ein topfförmiges Halteteil aus einem Blech vorzusehen, wobei eine Umfangswand entsprechend dem Profil an dem Reibring wellenartig konturiert ist, so dass der Reibring auf das topfförmige Halteteil aufgeschoben werden kann. Das wellenförmige Umformen der Umfangswand ist fertigungstechnisch aufwendig. Zudem ist bei einer derartigen Anordnung ist eine zusätzliche umfassende Axialsicherung vorzusehen.

Weitere Druckschriften aus dem Stand der Technik sind aus der EP 2 263 813, EP 0 830 520, und WO 2019/025529 bekannt. Die DE 10 2013 006423 offenbart dabei die Merkmale aus dem Oberbegriff des Anspruchs 1.

Der Erfindung liegt die **Aufgabe** zugrunde, eine Bremseinheit und ein Verfahren zu deren Herstellung anzugeben, welche einen einfachen Aufbau bei guten Festigkeitseigenschaften einer Bremseinheit ermöglichen.

Die Aufgabe wird nach der Erfindung zum einen durch eine Bremseinheit mit den Merkmalen des Anspruchs 1 und zum anderen durch ein Verfahren mit den Merkmalen des Anspruchs 9 gelöst. Bevorzugte Ausführungsformen der Erfindung sind in den jeweils abhängigen Ansprüchen angegeben.

Die erfindungsgemäße Bremseinheit ist dadurch gekennzeichnet, dass der Reibring einen axial vorstehenden, ringförmigen Verbindungsstutzen aufweist, welcher mit einer Außenprofilierung versehen ist, dass an dem Halteteil ein axial verlaufender Hülsenabschnitt ausgebildet ist, welcher mit einer zur Außenprofilierung korrespondierenden Innenprofilierung versehen ist, und dass zum Bilden der Bremseinheit der Hülsenabschnitt des Halteteiles mit dem Verbindungsstutzen des Reibrings axial gefügt ist, wobei die Außenprofilierung und die Innenprofilierung ineinander greifen und eine kraft- und formschlüssige drehfeste Verbindung gebildet ist.

Eine Grundidee der Erfindung besteht darin, an dem Reibring, welcher in der Regel als ein Guss- oder Schmiedeteil aus Metall, Keramik oder einer Mischung hieraus hergestellt ist, einen axial vorstehenden Verbindungsstutzen mit einer Außenprofilierung zu vorzusehen. Dies kann ohne wesentlichen Zusatzaufwand bei einem Gießen oder Schmieden des Reibringes erzeugt werden.

Ein weiterer Aspekt der Erfindung ist das Vorsehen eines Halteteiles mit einem axial verlaufenden Hülsenabschnitt, an dessen Innenseite eine korrespondierende Innenprofilierung ausgebildet ist. Durch ein axiales Fügen dieses Hülsenabschnittes mit der Innenprofilierung auf den Verbindungsstutzen mit der Außenprofilierung kann eine zuverlässige Verbindung zwischen dem Reibring und dem Halteteil erreicht werden. Das Fügen kann insbesondere mit einer Presspassung erfolgen, so dass neben einer formschlüssigen drehfesten Verbindung über insbesondere axial gerichtete Profilelemente der Außenprofilierung und der Innenprofilierung auch gleichzeitig eine kraftschlüssige axiale Lagesicherung zwischen den beiden Teilen gegeben ist.

Bei der erfindungsgemäßen Anordnung ist es insbesondere vorteilhaft, dass bei einer zunehmenden Belastung der Bremse sich grundsätzlich der Reibring schneller und stärker erwärmt als das Halteteil. Aufgrund der Materialausdehnung bei steigender Temperaturerhöhung ergibt sich so bei zunehmender Bremsbelastung eine immer stärkere Verbindung zwischen den innenliegenden Verbindungsstutzen des Reibrings und dem außenliegenden Hülsenabschnitt des Halteteils.

Grundsätzlich können die Außenprofilierung und die Innenprofilierung in jeder geeigneten Weise geformt sein. Besonders zweckmäßig ist nach einer Weiterbildung der Erfindung, dass die Außenprofilierung und die Innenprofilierung als eine Keilnutverzahnung ausgebildet sind. Diese sind axial gerichtet und weisen insbesondere definierte radial gerichtete Keil- und Nutflanken auf, welche eine gute drehfeste Verbindung bewirken.

Der Reibring kann als eine durchgehende Scheibe ausgebildet sein. Zweckmäßig ist es nach einer Ausführungsvariante der Erfindung, dass der Reibring ein Mittenloch aufweist, wobei der ringförmige Verbindungsstutzen um das Mittenloch ausgebildet ist. Dieser erlaubt eine Materialeinsparung und verbesserte Anbringungsmöglichkeiten der Bremseinheit.

Eine besonders feste Verbindung zwischen dem Reibring und dem Halteteil ist nach der Erfindung dadurch gegeben, dass zwischen der Außenprofilierung an dem ringförmigen Verbindungsstutzen und dem angrenzendem radial vorstehenden Reibring eine ringförmige Befestigungsnut ausgebildet ist und dass das Halteteil mit dem hülsenförmigen Abschnitt axial auf den ringförmigen Verbindungsstutzen mit der Außenprofilierung aufgebracht ist und ein freies Ende des Hülsenabschnittes zur axialen Lagesicherung des Halteteiles am Reibring in die Befestigungsnut verstemmt ist. Die Anordnung der radial nach innen gerichteten Befestigungsnut zwischen der Außenprofilierung am Verbindungsstutzen und dem angrenzenden Reibring bewirkt somit einen axialen Hinterschnittbereich. In diesen axialen Hinterschnittbereich der Befestigungsnut kann nach einem axialen Fügen oder Aufpressen des Hülsenabschnitts auf den Verbindungsstutzen ein freies Ende des Hül senabschnitts radial nach innen eingeformt werden. Dies kann über ein entsprechendes Stemmwerkzeug, insbesondere radial einfahrbaren Klauen oder mindestens einer relativ umlaufenden Umformrolle erfolgen. Der Hülsenabschnitt kann vorgeformt sein und wird nach einem axialen Aufpressen verstemmt. Grundsätzlich kann der Hülsenabschnitt direkt am Verbindungsstutzen angeformt und dabei auch verstemmt werden.

Das Halteteil dient zur Befestigung der Bremseinheit an einem Rad, einer Welle oder einer Achse, insbesondere eines Kraftfahrzeuges oder eines Schienenfahrzeuges. Das Halteteil kann dabei ausschließlich hülsenförmig oder hülsenförmig mit einem radial nach außen gerichteten Befestigungsflansch ausgebildet sein. Besonders bevorzugt ist es nach einer Ausführungsform der Erfindung, dass das Halteteil topfförmig mit einem Umfangsabschnitt und einem radial gerichteten Nabenabschnitt ausgebildet ist. Dies erlaubt eine gute Befestigung über ein radial nach innen gerichteten Nabenabschnitt bei einer insgesamt kompakten Ausbildung des Nabenteils.

Insbesondere ist es dabei vorteilhaft, dass in dem Nabenabschnitt des Halteteils ein Lochbild eingebracht ist. Dieses kann ein Mittenloch sowie weitere umfangsmäßig verteilte Befestigungslöcher aufweisen.

Grundsätzlich kann das Halteteil in jeder beliebigen Weise gefertigt sein. Besonders zweckmäßig ist es nach einer Variante der Erfindung, dass das Halteteil aus einem Blech durch Kaltumformung gebildet ist. Insbesondere bei einem topfförmigen Halteteil kann diese unter Verwendung eines Tiefziehwerkzeuges oder durch Drücken oder Drückwalzen aus einer Blechplatine hergestellt sein. Durch eine spannlose Kaltumformung kann insbesondere auch eine Erhöhung der Festigkeit des endgeformten Halteteiles gegenüber dem Ausgangsmaterial eingestellt werden.

Besonders vorteilhaft ist es insbesondere, dass zumindest die Innenprofilierung an dem Hülsenabschnitt des Halteteils spanlos, insbesondere durch Rollieren, gebildet ist. Die Innenprofilierung kann so an einem vorgeformten topfförmigen Zwischenwerkstück in einem einzelnen Arbeitsschritt durch Rollieren, also einem Drücken oder Drückwalzen hergestellt werden. Dabei wird das Blechmaterial unter Rotation in ein entsprechend konturiertes Drückfutter eingeformt, durch welches die Profilkontur des Innenprofiles für den Hülsenabschnitt vorgegeben ist. Bei Änderung des Profiles oder der Profilgrößen ist lediglich eine entsprechende Änderung der Drückfutters auf einer entsprechenden Rolliermaschine erforderlich.

Weiterhin kann der Reibring aus jedem geeigneten Material und auf jede geeignete Weise hergestellt sein. Besonders vorteilhaft ist nach einer Weiterbildung der Erfindung, dass der Reibring zusammen mit dem ringförmigen Verbindungsstutzen als ein Gussteil ausgebildet ist. Beim Gießen kann die Außenprofilierung bereits endgeformt sein. Gegebenenfalls kann auch eine Nachbearbeitung des Außenprofiles vor dem Fügevorgang erfolgen.

Grundsätzlich kann der Reibring als eine massive Ringscheibe hergestellt sein. Besonders bevorzugt ist nach einer Weiterbildung der Erfindung, dass der Reibring zwei Ringseiten aufweist, welche über Verbindungsstege miteinander verbunden sind, wobei ein hohler Zwischenraum zwischen den beiden Ringseiten verbleibt, und dass der Reibring mindestens teilweise spanabhebend und/oder beschichtet ist. Durch den Zwischenraum zwischen zwei Ringseiten des Reibrings kann eine verbesserte Wärmeabfuhr erzielt werden. Weiterhin kann der Reibring insbesondere hinsichtlich seiner Bremsflächen an den Ringseiten beim Abheben bearbeitet und/oder beschichtet sein. Als Beschichtung kann eine reibungsfördernde und/oder verschleißhemmende Beschichtung aufgetragen werden. Der Verbindungsstutzen kann dabei vorzugsweise nur an einer Ringseite des Reibrings ausgebildet sein.

Die Erfindung betrifft weiter ein Verfahren zum Herstellen einer erfindungsgemäßen Bremseinheit, wobei zum Bilden der Bremseinheit der Hülsenabschnitt des Halteteiles mit dem Verbindungsstutzen des Reibringes axial geführt wird, wobei die Außenprofilierung des Verbindungsstutzens und die Innenprofilierung des Hülsenabschnitts ineinander greifen und eine kraft- und formschlüssige drehfeste Verbindung gebildet wird.

Mit dem Verfahren kann insbesondere die zuvor beschriebene erfindungsgemäße Bremseinheit in effizienter Weise hergestellt werden. Dabei können die zuvor beschriebenen Vorteile erzielt werden.

Eine besonders feste Verbindung ergibt sich nach einer Ausführungsvariante des erfindungsgemäßen Verfahrens dadurch, dass der Hülsenabschnitt mit der Innenprofilierung auf den Verbindungsstutzen mit der Außenprofilierung axial aufgepresst wird, wobei eine Presspassung gebildet wird. Diese Presspassung kann zur Axialsicherung der drehfesten Verbindung ausreichend sein.

Eine weitere Verbesserung der Erfindung kann nach einer weiteren Verfahrensvariante dadurch erzielt werden, dass der Hülsenabschnitt mit dem Verbindungsstutzen zum Bilden einer axialen Lagesicherung verstemmt wird. Dies kann insbesondere dadurch erfolgen, dass ein freies Ende des Hülsenabschnitts in eine radiale Befestigungsnut eingeformt wird, welche am Reibring am Übergang zu dem Verbindungsstutzen ausgebildet ist.

Eine kostengünstige Fertigung eines besonders stabilen Halteteiles kann weiter dadurch erzielt werden, dass das Halteteil topfförmig aus einem Blech durch Kaltumformung gebildet wird. Bei der Kaltumformung, welche insbesondere durch Pressen, Tiefziehen, Prägen und/oder Rollieren ausgeführt werden kann, kann ein exaktes Ausformen ohne Wärmeverzug bei gleichzeitiger Erhöhung und Einstellung der Festigkeit eines Blechmaterials erzielt werden.

Besonders vorteilhaft ist es zudem, dass zumindest die Innenprofilierung an dem Halteteil durch Rollieren spanlos ausgebildet wird. Dabei kann auf einer Drück- oder Drückwalzmaschine Blechmaterial in eine entsprechende Außenkonturierung eines Drückwerkzeuges mittels Umformrollen bei Rotation des Werkstücks eingeformt werden.

Die Erfindung wird weiter anhand eines bevorzugten Ausführungsbeispiels weiter beschrieben, welches schematisch in den Zeichnungen dargestellt ist. In den Zeichnungen zeigen:
- Fig. 1: eine perspektivische Ansicht einer erfindungsgemäßen Bremseinheit;
- Fig. 2: eine Draufsicht auf die Bremseinheit von Fig. 1;
- Fig. 3: eine Querschnittsansicht der Bremseinheit von Fig. 2;
- Fig. 4: eine Seitenansicht der Bremseinheit der Figuren 1 bis 3; und
- Fig. 5: eine vergrößerte Detailansicht des Details A von Fig. 4.

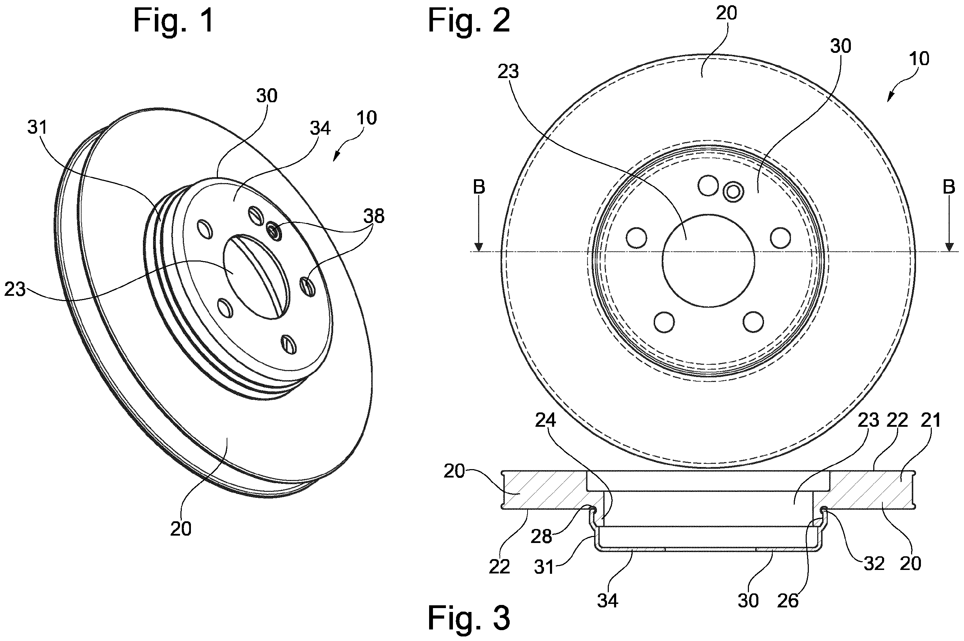

Gemäß Fig. 1 umfasst der grundsätzliche Aufbau einer Bremseinheit 10 einen scheibenförmigen Reibring 20 und ein daran angebrachtes Halteteil 30. Im dargestellten Ausführungsbeispiel ist das Halteteil 30 topfförmig mit einem trommelförmigen Umfangsabschnitt 31 und einem radial nach innen gerichteten Nabenabschnitt 34 ausgebildet. In dem radial gerichteten Nabenabschnitt 34 ist ein Lochbild 38 mit einem Mittendurchgang und mehreren Befestigungslöchern eingebracht.

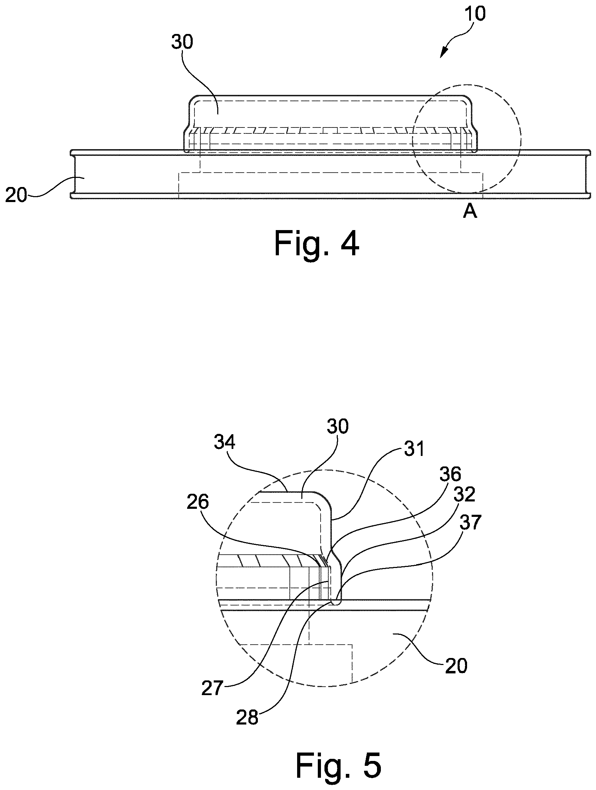

Wie insbesondere aus den Figuren 1 bis 3 zu entnehmen ist, weist der ringscheibenförmige Reibring 20, welcher aus einem Gussmaterial gefertigt sein kann, einen Grundkörper 21 mit zwei gegenüberliegenden Ringseiten 22 und einem Mittenloch 23 auf. An den Ringseiten 22 ist die eigentliche Reib- oder Bremsfläche ausgebildet, an welcher Bremsbacken oder Bremsklötze zur Erzeugung einer Bremswirkung in Eingriff kommen können. An einer Seite des Reibrings 20 ist um das Mittenloch 23 ein axial vorstehender Verbindungsstutzen 24 mit einer daran ausgeformten Außenprofilierung 26 ausgebildet. Die Außenprofilierung 26 kann als axial gerichtete Keilnuten 27 ausgebildet sein, wie in Fig. 5 dargestellt ist.

Zwischen dem radial gerichteten Teil des Grundkörpers 21 und der Außenprofilierung 26 am Verbindungsstutzen 24 ist eine ringförmige Befestigungsnut 28 im Übergangsbereich zum Verbindungsstutzen 24 eingebracht.

An dem Umfangsabschnitt 31 des Halteteils 30 ist ein Hülsenabschnitt 32 mit einer an der Innenseite ausgebildeten Innenprofilierung 36 vorgesehen, wie ebenfalls in Fig. 5 gezeigt ist. Die Innenprofilierung 36 korrespondiert mit der Außenprofilierung 26 am Verbindungsstutzen 24 und kann insbesondere ebenfalls Keilnuten aufweisen. Zum Herstellen einer festen Verbindung zwischen dem Halteteil 30 und dem Reibring 20 wird das Halteteil 30 axial aufgepresst, wobei anschließend ein freies Ende 37 des Hülsenabschnitts 32 in die hinterschneidende Befestigungsnut 28 eingeformt wird, wobei das Halteteil 30 am Reibring 20 verstemmt wird. Hierdurch ist eine zusätzliche Axialsicherung zu der drehfesten Verbindung geschaffen, welche durch das Ineinandergreifen von Außenprofilierung 26 und Innenprofilierung 36 bewirkt ist.

Die so hergestellte Verbindung zwischen dem Reibring 20 und dem topfförmigen Halteteil 30 ist nochmals näher in Zusammenhang mit den Figuren 4 und 5 dargestellt. Insbesondere der Fig. 5 ist das Ineinandergreifen der Außenprofilierung 26 am Verbindungsstutzen 24 mit der Innenprofilierung 36 am Hülsenabschnitt 32 des Halteteils 30 zu entnehmen. Das freie Ende 37 des Hülsenabschnitts 32 wird nach einem axialen Aufpressen, welches vorzugweise mit einer Presspassung erfolgt, in die hintergreifende ringförmige Befestigungsnut 28 plastisch eingeformt und damit verstemmt. Hierdurch wird eine zusätzliche Axialsicherung zwischen dem Reibring 20 und dem Halteteil 30 bewirkt.

In einem Bremsbetrieb erhitzt sich zunächst der Reibring 20 durch die bewirkte Reibungswärme. Hierdurch kann eine Materialausdehnung und damit auch eine gewisse Durchmessererweiterung des Reibrings 20 einschließlich des Verbindungsstutzens 24 am Reibring 20 einhergehen. Das daran angebrachte Halteteil 30 erwärmt sich aufgrund der Wärmeleitung langsamer und etwas weniger stark, so dass sich eine Durchmessererweiterung am Halteteil 30 erst später und in geringerem Maße ausbildet. Dies bedeutet, dass sich in einem Bremsbetrieb ein Kraftschluss zwischen dem Reibring 20 und dem Halteteil 30 bei der erfindungsgemäßen Bremseinheit noch erhöht. Dies ist für die Funktionsfähigkeit und die Betriebssicherheit der erfindungsgemäßen Bremseinheit 10 vorteilhaft.

## Patentansprüche

1. Bremseinheit, welche einen scheibenförmigen Reibring (20) und ein Halteteil (30) aufweist, welche miteinander verbunden sind,
wobei der Reibring (20) einen axial vorstehenden, ringförmigen Verbindungsstutzen (24) aufweist, welcher mit einer Außenprofilierung (26) versehen ist, und wobei an dem Halteteil (30) ein axial verlaufender Hülsenabschnitt (32) ausgebildet ist, welcher mit einer zur Außenprofilierung (26) korrespondierenden Innenprofilierung (36) versehen ist,
**dadurch gekennzeichnet,**
**dass** zum Bilden der Bremseinheit (10) der Hülsenabschnitt (32) des Halteteiles (30) mit dem Verbindungsstutzen (24) des Reibrings (20) axial gefügt ist, wobei die Außenprofilierung (26) und die Innenprofilierung (36) ineinandergreifen und eine kraft- und formschlüssige drehfeste Verbindung gebildet ist,
**dass** zwischen der Außenprofilierung (26) an dem ringförmigen Verbindungsstutzen (24) und dem angrenzenden radial vorstehenden Reibring (20) eine ringförmige Befestigungsnut (28) ausgebildet ist,
**dass** das Halteteil (30) mit dem Hülsenabschnitt (32) axial auf den ringförmigen Verbindungsstutzen (24) mit der Außenprofilierung (26) aufgebracht ist und ein freies Ende (37) des Hülsenabschnittes (32) zur axialen Lagesicherung des Halteteiles (30) am Reibring (20) in die Befestigungsnut (28) verstemmt ist, und dass das Halteteil (30) topfförmig mit einem Umfangsabschnitt (31) und einem radial gerichteten Nabenabschnitt (34) ausgebildet ist.

2. Bremseinheit nach Anspruch 1,
**dadurch gekennzeichnet,**
**dass** die Außenprofilierung (26) und die Innenprofilierung (36) als eine Keilnutverzahnung ausgebildet sind.

3. Bremseinheit nach Anspruch 1 oder 2,
**dadurch gekennzeichnet,**
**dass** der Reibring (20) ein Mittenloch (23) aufweist, wobei der ringförmige Verbindungsstutzen (24) um das Mittenloch (23) ausgebildet ist.

4. Bremseinheit nach Anspruch 1,
**dadurch gekennzeichnet,**
**dass** in den Nabenabschnitt (34) des Halteteils (30) ein Lochbild (38) eingebracht ist.

5. Bremseinheit nach einem der Ansprüche 1 bis 4,
**dadurch gekennzeichnet,**
**dass** das Halteteil (30) aus einem Blech durch Kaltumformung gebildet ist.

6. Bremseinheit nach Anspruch 5,
**dadurch gekennzeichnet,**
**dass** zumindest die Innenprofilierung (36) an dem Hülsenabschnitt (32) des Halteteils (30) spanlos, insbesondere durch Rollieren, gebildet ist.

7. Bremseinheit nach einem der Ansprüche 1 bis 6,
**dadurch gekennzeichnet,**
**dass** der Reibring (20) zusammen mit dem ringförmigen Verbindungsstutzen (24) als ein Gussteil ausgebildet ist.

8. Bremseinheit nach einem der Ansprüche 1 bis 7,
**dadurch gekennzeichnet,**
**dass** der Reibring (20) zwei Ringseiten (22) aufweist, welche über Verbindungsstege miteinander verbunden sind, wobei ein hohler Zwischenraum zwischen den beiden Ringseiten (22) verbleibt, und
**dass** der Reibring (20) zumindest teilweise spanabhebend bearbeitet und/oder beschichtet ist.

9. Verfahren zum Herstellen einer Bremseinheit (10) nach einem der Ansprüche 1 bis 8,
**dadurch gekennzeichnet,**
**dass** zum Bilden der Bremseinheit (10) der Hülsenabschnitt (32) des Halteteils (30) mit dem Verbindungsstutzen (24) des Reibrings (20) axial gefügt wird, wobei die Außenprofilierung (26) des Verbindungsstutzens (24) und die Innenprofilierung (36) des Hülsenabschnitts (32) ineinandergreifen und eine kraft- und formschlüssige drehfeste Verbindung gebildet wird,
**dass** zwischen der Außenprofilierung (26) an dem ringförmigen Verbindungsstutzen (24) und dem angrenzenden radial vorstehenden Reibring (20) eine ringförmige Befestigungsnut (28) ausgebildet wird,
**dass** das Halteteil (30) mit dem Hülsenabschnitt (32) axial auf den ringförmigen Verbindungsstutzen (24) mit der Außenprofilierung (26) aufgebracht wird und ein freies Ende (37) des Hülsenabschnittes (32) zur axialen Lagesicherung des Halteteiles (30) am Reibring (20) in die Befestigungsnut (28) verstemmt wird, und dass das Halteteil (30) topfförmig mit einem Umfangsabschnitt (31) und einem radial gerichteten Nabenabschnitt (34) ausgebildet ist.

10. Verfahren nach Anspruch 9,
**dadurch gekennzeichnet,**
**dass** der Hülsenabschnitt (32) mit der Innenprofilierung (36) auf den Verbindungsstutzen (24) mit der Außenprofilierung (26) axial aufgepresst wird, wobei eine Presspassung gebildet wird.

11. Verfahren nach Anspruch 9 oder 10,
**dadurch gekennzeichnet,**
**dass** der Hülsenabschnitt (32) mit dem Verbindungsstutzen (24) zum Bilden einer axialen Lagesicherung verstemmt wird.

12. Verfahren nach einem der Ansprüche 9 bis 11,
**dadurch gekennzeichnet,**
**dass** das Halteteil (30) topfförmig aus einem Blech durch Kaltumformung gebildet wird.

13. Verfahren nach einem der Ansprüche 9 bis 12,
**dadurch gekennzeichnet,**
**dass** zumindest die Innenprofilierung (36) an dem Halteteil (30) durch Rollieren spanlos ausgebildet wird.

## Claims

1. Brake unit having a disk-shaped friction ring (20) and a retaining part (30) which are connected to each other,
wherein the friction ring (20) has an axially protruding, annular connecting piece (24) which is provided with an external profiling (26), and
wherein on the retaining part (30) an axially running sleeve section (32) is designed which is provided with an internal profiling (36) corresponding to the external profiling (26),
**characterized in that**
**in that** in order to form the brake unit (10) the sleeve section (32) of the retaining part (30) is joined axially to the connecting piece (24) of the friction ring (20), wherein the external profiling (26) and the internal profiling (36) interlock and a force- and form-locking torque-proof connection is formed,
**in that** between the external profiling (26) on the annular connecting piece (24) and the adjoining radially protruding friction ring (20) an annular fastening groove (28) is designed,
**in that** the retaining part (30) with the sleeve section (32) is applied axially onto the annular connecting piece (24) with the external profiling (26) and, for the purpose of securing the axial position of the retaining part (30) on the friction ring (20), a free end (37) of the sleeve section (32) is caulked in the fastening groove (28), and
**in that** the retaining part (30) is of cup-shaped design with a circumferential section (31) and a radially directed hub section (34).

2. Brake unit according to claim 1,
**characterized in that**
the external profiling (26) and the internal profiling (36) are designed as splines.

3. Brake unit according to claim 1 or 2,
**characterized in that**
the friction ring (20) has a center hole (23), wherein the annular connecting piece (24) is designed around the center hole (23).

4. Brake unit according to claim 1,
**characterized in that**
a hole pattern (38) is introduced into the hub section (34) of the retaining part (30).

5. Brake unit according to any one of claims 1 to 4,
**characterized in that**
the retaining part (30) is formed of sheet metal through cold forming.

6. Brake unit according to claim 5,
**characterized in that**
at least the internal profiling (36) on the sleeve section (32) of the retaining part (30) is formed in a chipless manner, in particular through spinning operation.

7. Brake unit according to any one of claims 1 to 6,
**characterized in that**
the friction ring (20) is designed together with the annular connecting piece (24) as a cast part.

8. Brake unit according to any one of claims 1 to 7,
**characterized in that**
the friction ring (20) has two ring sides (22) that are connected to each other via connecting bridges, wherein a hollow space remains between the two ring sides (22), and
**in that** the friction ring (20) is at least partially machined and/or coated.

9. Method for producing a brake unit (10) according to any one of claims 1 to 8,
**characterized in that**
in order to form the brake unit (10) the sleeve section (32) of the retaining part (30) is joined axially to the connecting piece (24) of the friction ring (20), wherein the external profiling (26) of the connecting piece (24) and the internal profiling (36) of the sleeve section (32) interlock and a force- and form-locking torque-proof connection is formed,
**in that** between the external profiling (26) on the annular connecting piece (24) and the adjoining radially protruding friction ring (20) an annular fastening groove (28) is designed,
**in that** the retaining part (30) with the sleeve section (32) is applied axially onto the annular connecting piece (24) with the external profiling (26) and, for the purpose of securing the axial position of the retaining part (30) on the friction ring (20), a free end (37) of the sleeve section (32) is caulked in the fastening groove (28), and **in that** the retaining part (30) is of cup-shaped design with a circumferential section (31) and a radially directed hub section (34).

10. Method according to claim 9,
**characterized in that**
the sleeve section (32) with the internal profiling (36) is pressed axially onto the connecting piece (24) with the external profiling (26), whereby a press fit is formed.

11. Method according to claim 9 or 10,
**characterized in that**
the sleeve section (32) is caulked to the connecting piece (24) in order to form a securing of the axial position.

12. Method according to any one of claims 9 to 11,
**characterized in that**
the retaining part (30) is formed in a cup-shaped manner from sheet metal through cold forming.

13. Method according to any one of claims 9 to 12,
**characterized in that**
at least the internal profiling (36) on the retaining part (30) is designed in a chipless manner through spinning operation.

## Revendications

1. Unité de freinage, qui comprend un anneau de friction en forme de disque (20) et une pièce de maintien (30), qui sont reliées entre elles,
dans lequel l'anneau de friction (20) comprend un embout de raccordement (24) annulaire dépassant axialement, qui est muni d'un profilage externe (26) et
dans lequel, sur la pièce de maintien (30), est réalisée une portion de manchon (32) s'étendant axialement, qui est munie d'un profilage interne (36) correspondant au profilage externe (26),
**caractérisé en ce que**
pour la réalisation de l'unité de freinage (10), la portion de manchon (32) de la pièce de maintien (30) est jointe axialement avec l'embout de raccordement (24) de l'anneau de friction (20), dans lequel le profilage externe (26) et le profilage interne (36) s'emboîtent l'un dans l'autre et un raccordement solidaire en rotation par force ou par complémentarité de forme est formé,
**en ce que**, entre le profilage externe (26), sur l'embout de raccordement annulaire (24) et l'anneau de friction (20) adjacent dépassant radialement, une rainure de fixation annulaire (28) est réalisée,
**en ce que** la pièce de maintien (30) avec la portion de manchon (32) est montée axialement sur l'embout de raccordement (24) avec le profilage externe (26) et une extrémité libre (37) de la portion de manchon (32) est refoulée dans la rainure de fixation (28) pour la sécurisation de la position axiale de la pièce de maintien (30) sur l'anneau de friction (20) et
**en ce que** la pièce de maintien (30) présente une forme de pot avec une portion périphérique (31) et une portion de moyeu (34) orientée radialement.

2. Unité de freinage selon la revendication 1,
**caractérisée en ce que**
le profilage externe (26) et le profilage interne (36) sont conçus comme une denture à clavettes.

3. Unité de freinage selon la revendication 1 ou 2,
**caractérisée en ce que**
l'anneau de friction (20) comprend un trou central (23), l'embout de raccordement annulaire (24) étant réalisé autour du trou central (23).

4. Unité de freinage selon la revendication 1,
**caractérisée en ce que**
dans la portion de moyeu (34) de la pièce de maintien (30) est inséré un gabarit de perçage (38).

5. Unité de freinage selon l'une des revendications 1 à 4,
**caractérisée en ce que**
la pièce de maintien (30) est constituée d'une tôle par formage à froid.

6. Unité de freinage selon la revendication 5,
**caractérisée en ce que**
au moins le profilage interne (36) est formé sur la portion de manchon (32) de la pièce de maintien (30) sans enlèvement de matière, plus particulièrement par roulage.

7. Unité de freinage selon l'une des revendications 1 à 6,
**caractérisée en ce que**
l'anneau de friction (20) est réalisé conjointement avec un embout de raccordement annulaire (24) comme une pièce coulée.

8. Unité de freinage selon l'une des revendications 1 à 7,
**caractérisée en ce que**
l'anneau de friction (20) comprend deux côtés annulaires (22) qui sont reliés entre eux par l'intermédiaire de nervures de raccordement, un espace intermédiaire creux subsistant entre les deux côtés annulaires (22) et
l'anneau de friction (20) est usinée au moins partiellement par enlèvement de matière et/ou revêtue.

9. Procédé de fabrication d'une unité de freinage (10) selon l'une des revendications 1 à 8,
**caractérisé en ce que**
pour la réalisation de l'unité de freinage (10), la portion de manchon (32) de la pièce de maintien (30) est jointe axialement avec l'embout de raccordement (24) de l'anneau de friction (20), dans lequel le profilage externe (26) de l'embout de raccordement (24) et le profilage interne (36) de la portion de manchon (32) s'emboîtent l'un dans l'autre et un raccordement solidaire en rotation par force et par complémentarité de forme est formé,
entre le profilage externe (26) sur l'embout de raccordement annulaire (24) et l'anneau de friction (20) adjacent dépassant axialement, est formée une rainure de fixation annulaire (28),
la pièce de maintien (30) avec la portion de manchon (32) est montée axialement sur l'embout de raccordement (24) avec le profilage externe (26) et une extrémité libre (37) de la portion de manchon (32) est refoulée dans la rainure de fixation (28) pour la sécurisation de la position axiale de la pièce de maintien (30) sur l'anneau de friction (20) et
la pièce de maintien (30) présente une forme de pot avec une portion périphérique (31) et une portion de moyeu (34) orientée radialement.

10. Procédé selon la revendication 9,
**caractérisé en ce que** la portion de manchon (32) avec le profilage interne (36) est comprimée axialement sur l'embout de raccordement (24) avec le profilage externe (26), un ajustement serré étant ainsi formé.

11. Procédé selon la revendication 9 ou 10,
**caractérisé en ce que**
la portion de manchon (32) avec l'embout de raccordement (24) est refoulée pour réaliser un maintien de la position axiale.

12. Procédé selon l'une des revendications 9 à 11,
**caractérisé en ce que**
la pièce de maintien (30) présente une forme de pot et est constituée d'une tôle par formage à froid.

13. Procédé selon l'une des revendications 9 à 12,
**caractérisé en ce que**
au moins le profilage interne (36) est réalisé sur la pièce de maintien (30) par roulage, sans enlèvement de matière.
